# EUROPÄISCHE PATENTSCHRIFT

(11) **EP 4 520 178 B1**
(45) Veröffentlichungstag und Bekanntmachung des Hinweises auf die Patenterteilung: **10.06.2026**
(21) Anmeldenummer: 24198547.2
(22) Anmeldetag: 05.09.2024
(51) Int. Cl.: A22C 17/00

(54) **VORRICHTUNG UND VERFAHREN ZUM HERSTELLEN VON LEBENSMITTELSPIESSEN**
DEVICE AND METHOD FOR PRODUCING FOOD SKEWERS
DISPOSITIF ET PROCÉDÉ DE FABRICATION DE BROCHETTES ALIMENTAIRES

(30) Priorität: 06.09.2023 DE 102023123939
(43) Veröffentlichungstag der Anmeldung: 12.03.2025
(73) Patentinhaber: MiVEG GmbH Automated Food Systems - European, 91341 Röttenbach (DE)
(72) Erfinder: Kracker, Lars, 91341 Röttenbach (DE)
(74) Vertreter: Lösch, Christoph Ludwig Klaus

(56) Entgegenhaltungen:
- EP-A1- 1 437 046
- EP-A1- 1 902 623
- EP-B1- 2 048 960
- CN-A- 110 200 046
- GR-A- 20150 100 297

## Beschreibung

Die Erfindung betrifft eine Vorrichtung und ein Verfahren zum Herstellen von Lebensmittelspießen.

Das Aufspießen von Lebensmittelstücken auf einen Holz- oder Metallspieß zur anschließenden Zubereitung im Ofen oder auf einem Grill ist weit verbreitet. Beispiele für derartige Lebensmittelspieße sind Schaschlik- oder Kebabspieße, die aus Fleisch wie Rind und Hähnchen bestehen, Gemüsespieße aus Zwiebeln, Paprika und ähnlichem, Spieße mit Meeresfrüchten und/oder Fisch sowie gemischte Spieße aus Fleisch, Fisch, Pilzen und/oder Gemüse. In ähnlicher Weise können Spieße aus Trauben und Käse oder allgemein Fruchtspieße hergestellt werden.

Bei der klassischen manuellen Herstellung werden die gewünschten Lebensmittelkomponenten zunächst per Hand in die gewünschte Größe gebracht und anschließend auf den Spieß gesteckt. Dies hat jedoch eine Reihe von Nachteilen. Beispielsweise ist das Zerkleinern der Ausgangskomponenten arbeits- und zeitintensiv. Des Weiteren kann der Spieß aufgrund der Krafteinwirkung beim Aufstecken brechen bzw. knicken. Auch ist nicht sichergestellt, dass die Lebensmittelstücke gleichmäßig zerkleinert und mittig fixiert werden, sodass ein (ungewünschtes) unregelmäßiges Aussehen des Schaschliks die Folge sein kann. Schließlich kann das Aufspießen der Lebensmittelstücke (je nach Konsistenz der Lebensmittel) mit einem relativ hohen Kraftaufwand verbunden sein und es besteht eine relativ hohe Verletzungsgefahr.

Neben der manuellen Herstellung gibt es daher Vorrichtungen, die ein automatisiertes Bestücken der Spieße mit Lebensmittelstücken - also ein automatisiertes Herstellen von Lebensmittelspießen - erlauben. EP 1 437 046 A1 beschreibt eine derartige automatisierte Vorrichtung, die u.a. ein Magazin zur Aufnahme von Lebensmittelstücken und eine Vorrichtung zum Transport des Magazins aufweist. Das Magazin besitzt einen Aufnahmeraum, in den die aufzuspießenden Lebensmittelstücke eingelegt werden. Anschließend wird der Spieß durch die Lebensmittelstücke getrieben und der fertige Spieß wird aus dem Magazin entfernt. Die oben beschriebene automatisierte Vorrichtung besitzt den Nachteil, dass nur Lebensmittelstücke verarbeitet werden können, die bereits die richtige Größe besitzen. Die automatisierte Verarbeitung von Ausgangskomponenten mit größeren Abmessungen ist nicht möglich. GR 2015 0100 297 A beschreibt ebenfalls eine Vorrichtung zum Herstellen von Lebensmittelspießen mit einer endlos umlaufenden Transportvorrichtung, auf der Magazineinheiten positioniert sind. Auch dort werden die bereits vorkonfektionierten Ausgangskomponenten per Hand in die Kammern der Magazineinheiten eingelegt. Anschließend wird in einer Aufspießstation ein Spieß durch die Lebensmittelstücke getrieben und der fertige Spieß wird aus dem Magazin entfernt. Auch in GR 2015 0100 297 A können nur Lebensmittelstücke automatisiert verarbeitet werden, die bereits die richtige Größe besitzen.

Der Erfindung liegt die Aufgabe zugrunde, eine Vorrichtung und ein Verfahren zum Herstellen von Lebensmittelspießen anzubieten, durch welches Lebensmittelspieße auch aus einer Ausgangskomponente mit größeren Abmessungen einfach und rationell hergestellt werden können.

Diese Aufgabe wird durch eine Vorrichtung mit den Merkmalen des Anspruchs 1 bzw. durch ein Verfahren mit den Merkmalen des Anspruchs 9 gelöst. Vorteilhafte Ausführungsformen sind in den Unteransprüchen beschrieben.

Die erfindungsgemäße Vorrichtung zum Herstellen von Lebensmittelspießen besitzt eine endlos umlaufende Transportvorrichtung mit einer Mehrzahl von parallel zueinander und quer zur Umlaufrichtung der Transportvorrichtung angeordneten Magazinbasiseinheiten, eine Beladestation, eine Zerkleinerungsstation und eine Aufspießstation. Jede der Magazinbasiseinheiten hat eine längliche Grundplatte, einen ersten Lagerblock, der an einem ersten längsseitigen Ende der Grundplatte ausgebildet ist und eine erste Spießauflage aufweist, einen zweiten Lagerblock, der an einem zweiten längsseitigen Ende der Grundplatte ausgebildet ist und eine zweite Spießauflage aufweist, Trennwände, die parallel zum den Lagerblöcken verlaufen und die Magazinbasiseinheit in Kammern unterteilt, wobei die Trennwände Schlitze aufweisen, die in Umlaufrichtung der Transportvorrichtung orientiert sind, und einen Spießdurchgang, durch den ein zu bestückender Spieß die Magazinbasiseinheit von der ersten Spießauflage in Richtung der zweiten Spießauflage durchdringen kann. Die Beladestation dient zur Positionierung einer ersten Lebensmittelkomponente (d.h. der noch unzerkleinerten Ausgangskomponente) in einem aus den Kammern der Magazinbasiseinheit gebildeten Aufnahmeraum. Die Zerkleinerungsstation, welche in Umlaufrichtung nachfolgend zur Beladestation angeordnet ist, weist parallel zueinander angeordneten Trennmesser auf, welche bei umlaufenden Magazinbasiseinheiten in den Schlitzen laufen und die in der Beladestation positionierte erste Lebensmittelkomponente zertrennen. Die Aufspießstation, welche in Umlaufrichtung nachfolgend zur Zerkleinerungsstation angeordnet ist, treibt einen zu bestückenden Spieß in Richtung des Spießdurchgangs durch die Magazinbasiseinheit und die in den Kammern positionierten Lebensmittelkomponenten.

Erfindungsgemäß wird somit die (noch unzerkleinerte) Ausgangskomponente in die Magazinbasiseinheit eingelegt und anschließend in der Zerkleinerungsstation durch die Trennmesser zertrennt. Die zertrennten (d.h. zerkleinerten) Lebensmittelstücke befinden sich dann bereits in der Magazinbasiseinheit und können ohne weitere Zwischenschritte in der Aufspießstation aufgespießt werden. Es entfällt somit das Zerkleinern der Ausgangskomponente und das manuelle Einlegen der Lebensmittelstücke in die einzelnen Kammern der Magazinbasiseinheit. Mit anderen Worten wird zunächst eine unzerkleinerte Ausgangskomponente (z.B. ein Stück Fleisch) in die Magazinbasiseinheit eingelegt. Diese wird dann durch die Zerkleinerungsstation in mehrere Stücke zerteilt. Unmittelbar anschließend (d.h. ohne weitere Zwischenschritte und insbesondere ohne Herausnehmen der zerteilten Stücke aus der Magazinbasiseinheit) werden die Stücke dann in der Aufspießstation aufgespießt. Die Herstellung der Lebensmittelspieße wird dadurch weiter erleichtert, rationalisiert und automatisiert.

In einer vorteilhaften Ausführungsform weist die Vorrichtung ferner eine Verschließstation zum Aufbringen eines Magazindeckels auf die Magazinbasiseinheit auf, wobei diese Verschließstation in Umlaufrichtung der Transportvorrichtung zwischen der Zerkleinerungsstation und der Aufspießstation angeordnet ist. Durch das Verschließen der Magazinbasiseinheit durch den Magazindeckel werden die in die Kammern des Magazins aufgenommenen Lebensmittelstücke vor dem Herausfallen oder Herausdrücken gesichert und es kann sichergestellt werden, dass die Lebensmittelstücke zuverlässig aufgespießt werden.

Der Magazindeckel kann hierbei Trennwandelemente aufweisen, die zusammen mit den Trennwänden der Magazinbasiseinheit die Kammern zur Aufnahme der Lebensmittelkomponenten sowie den Spießdurchgang bilden. Mit anderen Worten bilden die Trennwandelemente des Magazindeckels und die Trennwände der Magazinbasiseinheit eine bis auf den Spießdurchgang vollständige Trennung zwischen zwei benachbarten Kammern aus. Dadurch werden die Lebensmittelstücke in den Kammern sicher gelagert und können auch während des Aufspießvorgangs nicht versehentlich aus den Kammern gedrückt werden. Außerdem ermöglichen dien Trennwandelemente am Magazindeckel, dass die Trennwände an der Magazinbasiseinheit eine entsprechend geringere Höhe aufweisen müssen und dennoch eine vollständige Trennung zwischen zwei benachbarten Kammern gegeben ist. Durch diese geringere Höhe der Trennwände wird der Aufnahmeraum, der für die Positionierung der ersten Lebensmittelkomponente zur Verfügung steht, vergrößert. Dies wiederum erleichtert die Positionierung der ersten Lebensmittelkomponente (d.h. der unzerkleinerten Ausgangskomponente). In einer besonders vorteilhaften Ausführungsform entspricht hierbei die Höhe der Trennwände der Magazinbasiseinheit der Höhe der Trennwandelemente des Magazindeckels. Auf diese Weise kann der Spießdurchgang durch die Kontaktebene der Trennwandelemente und der Trennwände verlaufen.

Des Weiteren können an der Magazinbasiseinheit Stützelemente zur Abstützung des Magazindeckels ausgebildet sein. Diese Stützelemente verbessern zum einen die Lagestabilität des Magazindeckels auf der Magazinbasiseinheit. Zum anderen stellen sie jedoch auch eine Barriere für die in den Aufnahmeraum positionierte erste Lebensmittelkomponente dar. Genauer verhindern die Stützelemente zunächst das Verschieben der Ausgangskomponente vor und während des Zertrennens in der Zerkleinerungsstation und anschließend auch das Herausfallen bzw. -drücken der zerkleinerten Lebensmittelstücke vor und während des Aufspießens in der Aufspießstation. Die Stützelemente sind geschlitzt, d.h. die Schlitze der Trennwände setzen sich durch die Stützelemente hindurch fort, sodass die Trennmesser ungehindert die im Aufnahmeraum positionierte Ausgangskomponente in die Lebensmittelstücke zerkleinern kann. In einer besonders vorteilhaften Ausführungsform können am Magazindeckel Stützauflagen ausgebildet sein, die bei geschlossenem Magazin die Stützelemente der Magazinbasiseinheit kontaktieren. Die Trennwandelemente und die Stützauflagen des Magazindeckels sind hierbei nicht geschlitzt, d.h. die oben erwähnten Schlitze sind lediglich in den Trennwänden und den Stützelementen der Magazinbasiseinheit vorhanden. Auf diese Weise wird die Stabilität des Magazindeckels - und damit auch die Stabilität des gesamten Magazins - erhöht, was insbesondere das Aufspießergebnis verbessert.

Die Trennmesser in der Zerkleinerungsstation sind in vorteilhafter Weise als Rundmesser bzw. Sägeblätter ausgebildet. Die Dicke der Trennmesser ist hierbei kleiner als die Dicke der Schlitze in der Magazinbasiseinheit, sodass die Trennmesser ungehindert in den Schlitzen laufen und die im Aufnahmeraum positionierte Ausgangskomponente in die Lebensmittelstücke zerkleinern können.

Die Zerkleinerungsstation kann Auflager zur Lagerung der Trennmesser aufweisen. In bevorzugter Weise sind diese Auflager seitlich zur Transportvorrichtung angeordnet, sodass zum einen eine beidseitige Lagerung der Messerwelle möglich ist und zum anderen sich die Magazinbasiseinheiten ungehindert in Umlaufrichtung bewegen können.

In einer weiteren bevorzugten Ausführungsform weist die Vorrichtung ferner eine Ergänzungsstation auf, in welcher eine oder mehrere weitere Lebensmittelkomponenten in die Kammern angeordnet werden. Diese Ergänzungsstation ist in Umlaufrichtung zwischen der Zerkleinerungsstation und der Aufspießstation bzw., falls eine Verschließstation vorhanden ist, zwischen der Zerkleinerungsstation und der Verschließstation angeordnet. Durch die Ergänzungsstation können eine oder mehrere weitere Lebensmittelkomponenten, die keiner Zerkleinerung bedürfen, in die Kammern der Magazinbasiseinheit eingebracht werden. In den Kammern befinden sich dann also die durch die Zerkleinerungsstation zerkleinerten Lebensmittelstücke der ersten Lebensmittelkomponente (z.B. Fleisch) und zusätzlich weitere Lebensmittelstücke anderer Lebensmittelkomponenten (z.B. Gemüse). Diese werden anschließend durch die Aufspießstation zu einem Lebensmittelspieß aus unterschiedlichen Lebensmittelkomponenten) vervollständigt.

In einer weiteren bevorzugten Ausführungsform weist die Vorrichtung ferner eine Entladestation zur Entnahme des hergestellten Lebensmittelspießes aus dem Magazinbasisteil auf. Diese Entladestation ist in Umlaufrichtung nachfolgend zur Aufspießstation angeordnet und sorgt für eine rationelle Entnahme der fertigen Lebensmittelspieße aus dem Magazin, sodass die Magazinbasisteile anschließend wieder mit neuen Ausgangskomponenten für weitere Lebensmittelspieße bestückt werden können.

Das erfindungsgemäße Verfahren zum Herstellen von Lebensmittelspießen weist folgende Verfahrensschritte auf: (1) Positionierung einer ersten Lebensmittelkomponente in einem aus Kammern einer Magazinbasiseinheit gebildeten Aufnahmeraum, wobei die Magazinbasiseinheit mittels einer endlos umlaufenden Transportvorrichtung bewegbar ist und aufweist: eine längliche Grundplatte, einem ersten Lagerblock, der an einem ersten längsseitigen Ende der Grundplatte ausgebildet ist und eine erste Spießauflage aufweist, einen zweiten Lagerblock, der an einem zweiten längsseitigen Ende der Grundplatte ausgebildet ist und eine zweite Spießauflage aufweist, Trennwände, die parallel zum den Lagerblöcken verlaufen und die Magazinbasiseinheit in Kammern unterteilt, wobei die Trennwände Schlitze aufweisen, die in Umlaufrichtung der Transportvorrichtung orientiert sind, und einen Spießdurchgang, durch den ein zu bestückender Spieß die Magazinbasiseinheit von der ersten Spießauflage in Richtung der zweiten Spießauflage durchdringen kann; (2) Zertrennen der in dem Aufnahmeraum positionierten ersten Lebensmittelkomponente durch parallel zueinander angeordnete Trennmesser, welche bei umlaufender Magazinbasiseinheit in den Schlitzen laufen; und (3) Treiben eines zu bestückenden Spießes in Richtung des Spießdurchgangs durch die Magazinbasiseinheit und die in den Kammern positionierten Lebensmittelkomponenten.

Erfindungsgemäß wird somit die (noch unzerkleinerte) Ausgangskomponente in die Magazinbasiseinheit eingelegt und anschließend durch die Trennmesser zertrennt. Die zertrennten (d.h. zerkleinerten) Lebensmittelstücke befinden sich dann bereits in der Magazinbasiseinheit und können ohne weitere Zwischenschritte aufgespießt werden. Es entfällt somit das manuelle Zerkleinern der Ausgangskomponente und das manuelle Einlegen der Lebensmittelstücke in die einzelnen Kammern der Magazinbasiseinheit. Die Herstellung der Lebensmittelspieße wird dadurch weiter erleichtert, rationalisiert und automatisiert.

In einer vorteilhaften Ausführungsform weist das Verfahren ferner das Aufbringen eines Magazindeckels auf die Magazinbasiseinheit auf, wobei der Magazindeckel Trennwandelemente aufweist, die zusammen mit den Trennwänden der Magazinbasiseinheit die Kammern zur Aufnahme der Lebensmittelkomponenten sowie den Spießdurchgang bilden, wobei an der Magazinbasiseinheit Stützelemente zur Abstützung des Magazindeckels ausgebildet sind und wobei die Schlitze auch die Stützelemente durchdringen.

Eine weitere vorteilhafte Ausführungsform des Verfahrens weist den Verfahrensschritte Anordnen einer oder mehrerer weiterer Lebensmittelkomponenten in die Kammern der Magazinbasiseinheit auf, wobei dieser Verfahrensschritt nach dem Verfahrensschritt des Zertrennens, aber vor dem Verfahrensschritt des Treibens durchgeführt wird.

Des Weiteren kann das Verfahren als abschließenden Verfahrensschritt die Entnahme des hergestellten Lebensmittelspießes aus dem Magazinbasisteil umfassen.

Die Erfindung ist anhand eines Ausführungsbeispiels in den Zeichnungsfiguren weiter erläutert. Es zeigen:
- Fig. 1: ein schematisches Blockdiagramm mit Hauptkomponenten einer Vorrichtung zum Herstellen von Lebensmittelspießen;
- Fig. 2: eine perspektivische Ansicht eines Ausschnitts einer Vorrichtung zum Herstellen von Lebensmittelspießen mit teilweise dargestellter Transportvorrichtung, Magazinbasiseinheiten und Zerkleinerungsstation;
- Fig. 3: eine perspektivische Ansicht einer Magazinbasiseinheit aus Fig. 2;
- Fig. 4: eine Draufsicht auf die Magazinbasiseinheit aus Fig. 3 mit einer in den Aufnahmeraum platzierten (unzerkleinerten) Ausgangskomponente aus einer ersten Lebensmittelkomponente;
- Fig. 5: eine Draufsicht auf die Magazinbasiseinheit aus Fig. 3 nach dem Zerkleinern der Ausgangskomponente in Lebensmittelstücke;
- Fig. 6: eine perspektivische Ansicht eines Magazindeckels;
- Fig. 7: eine perspektivische Ansicht eines aus der Magazinbasiseinheit nach Fig. 3 und dem Magazindeckel nach Fig. 6 bestehenden Magazins; und
- Fig. 8: eine perspektivische Ansicht des Magazins aus Fig. 7 im geschlossenen Zustand.

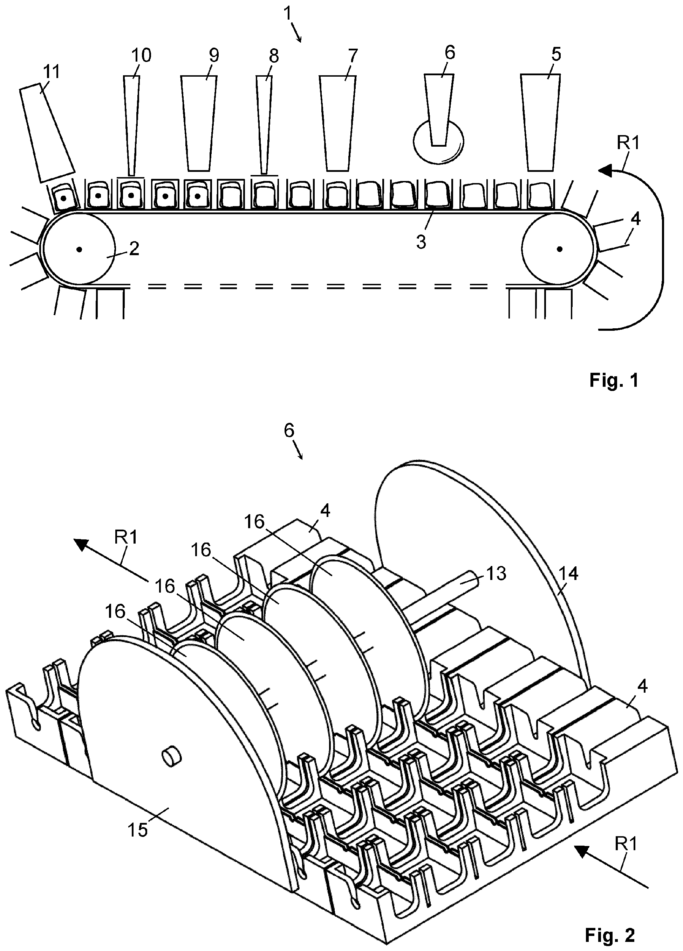

Fig. 1 zeigt schematisch eine Vorrichtung 1 zum Herstellen von Lebensmittelspießen. Die Vorrichtung 1 dient allgemein zur automatisierten Herstellung von Lebensmittelspießen, d.h. von Holz- oder Metallspießen, auf die Lebensmittelstücke aufgespießt sind. Die Vorrichtung 1 weist eine Transportvorrichtung 2 mit einer endlos umlaufenden Förderkette bzw. Förderband 3 auf. Die Transportvorrichtung 2 treibt die Förderkette bzw. das Förderband 3 in Umlaufrichtung R1 der Transportvorrichtung 2 an. Der Antrieb kann hierbei kontinuierlich oder auch getaktet erfolgen. Mit der Förderkette / dem Förderband 3 verbunden sind Magazinbasiseinheiten 4, sodass die Magazinbasiseinheiten 4 ebenfalls in Umlaufrichtung R1 fortbewegt werden. Die Magazinbasiseinheiten 4 dienen der Aufnahme der Lebensmittelkomponenten, die mittels der Vorrichtung 1 auf einen Holz- oder Metallspieß gespießt werden sollen. Die Magazinbasiseinheiten 4 sind parallel zueinander und quer zur Umlaufrichtung R1 ausgerichtet.

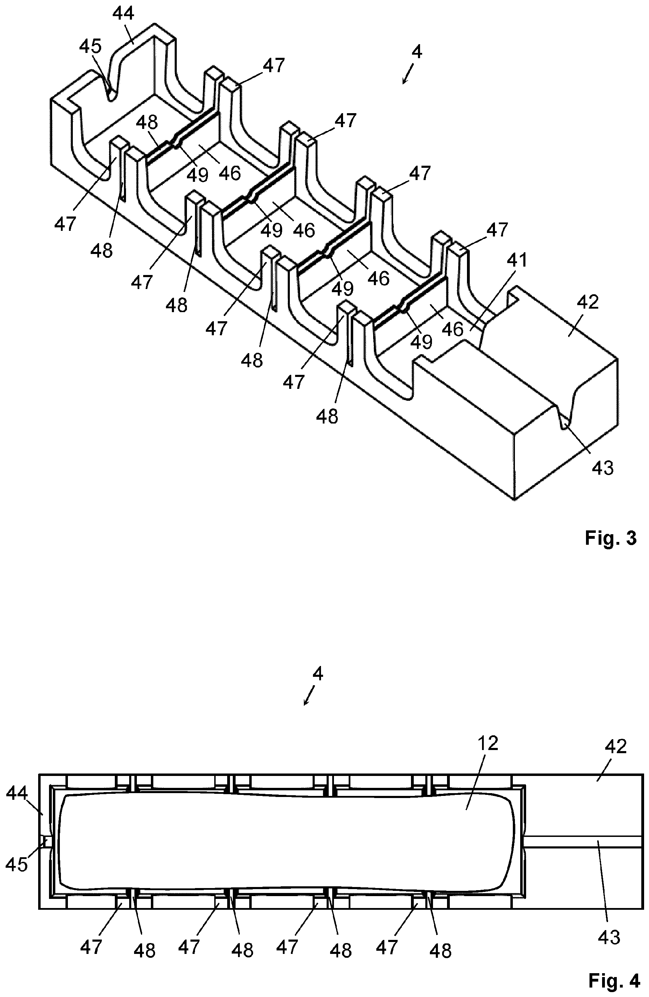

Fig. 3 beschreibt eine Magazinbasiseinheit 4 näher. Die Magazinbasiseinheit 4 weist eine längliche Grundplatte 41, einen ersten Lagerblock 42 mit einer ersten Spießauflage 43, einen zweiten Lagerblock 44 mit einer zweiten Spießauflage 45, Trennwände 46 und Stützelemente 47 auf. Die Trennwände 46 verlaufen parallel zu den beiden Lagerblöcken 42, 44. Die Trennwände 46 und die Stützelemente 47 weisen jeweils einen Schlitz 48 auf. Genauer verläuft der Schlitz 48 in Längsrichtung der Trennwand 46 und geht kontinuierlich in die beiden an die Trennwand 46 angrenzenden Stützelemente 47 über. An den Trennwänden 46 ist jeweils eine Aussparung 49 vorgesehen, sodass ein Spießdurchgang entsteht, durch den ein zu bestückender Spieß die Magazinbasiseinheit 4 von der ersten Spießauflage 43 in Richtung der zweiten Spießauflage 45 durchdringen kann. Die Höhe des ersten Lagerblocks 42 und des zweiten Lagerblocks 44 entspricht der Höhe der Stützelemente 47. Die Höhe der Trennwände 46 ist geringer als diese Höhe. Genauer besitzen die Trennwände 46 eine Höhe, sodass die Trennwände bis an den Spießdurchgang heranreichen. Durch die Trennwände 46 wird die Magazinbasiseinheit 4 in mehrere Kammern unterteilt, in die die aufzuspießenden Lebensmittel positioniert werden können. Die Gesamtheit der Kammern wird im Folgenden auch als Aufnahmeraum bezeichnet.

Die Vorrichtung 1 weist in Umlaufrichtung R1 der Transportvorrichtung 2 gesehen die folgenden Stationen auf (vgl. Fig. 1): eine Beladungsstation 5, eine Zerkleinerungsstation 6, eine Ergänzungsstation 7, eine Verschließstation 8, eine Aufspießstation 9, eine Öffnungsstation 10 und eine Entladestation 11.

Die Beladestation 5 positioniert eine erste Lebensmittelkomponente 12 in den Aufnahmeraum der Magazinbasiseinheiten 4. Hierbei handelt es sich um eine Lebensmittelkomponente, die aufgrund ihrer Abmessungen zu groß für ein direktes Aufspießen ist, d.h. eine Lebensmittelkomponente die im weiteren Verlauf zunächst zerkleinert und anschließend aufgespießt werden soll. Fig. 4 zeigt eine Magazinbasiseinheit 4, in deren Aufnahmeraum eine erste Lebensmittelkomponente 12 positioniert ist. Dies entspricht also einer Situation zwischen der Beladestation 5 und der Zerkleinerungsstation 6.

Die Zerkleinerungsstation 6 ist in Fig. 2 näher dargestellt und weist eine Messerwelle 13 auf, die endseitig in Auflagern 14, 15 drehgelagert ist. Die Auflager 14, 15 sind seitlich zur Förderkette bzw. zum Förderband 3 angeordnet. Auf der Messerwelle 13 sind Trennmesser 16 angebracht. Die Trennmesser 16 können beispielsweise als Rundmesser bzw. Sägeblätter ausgebildet sein. Die Messerwelle 13 ist durch einen (in den Figuren nicht dargestellten) Motor antreibbar. Die Trennmesser 16 sind parallel zueinander ausgerichtet und besitzen einen Abstand voneinander, der den Abstand zweier benachbarter Trennwände 46 der Magazinbasiseinheit 4 entspricht. Des Weiteren sind die Trennmesser 16 derart positioniert, dass sie bei umlaufenden Magazinbasiseinheiten 4 in den Schlitzen 48 laufen.

Fig. 2 zeigt ferner eine Mehrzahl von Magazinbasiseinheiten 4, die durch die Transportvorrichtung 2 entlang der Umlaufrichtung bewegt werden. Dabei sind die Aufnahmeräume der Magazinbasiseinheiten 4 leer dargestellt, d.h. es wurde auf die Darstellung der Lebensmittelkomponenten verzichtet.

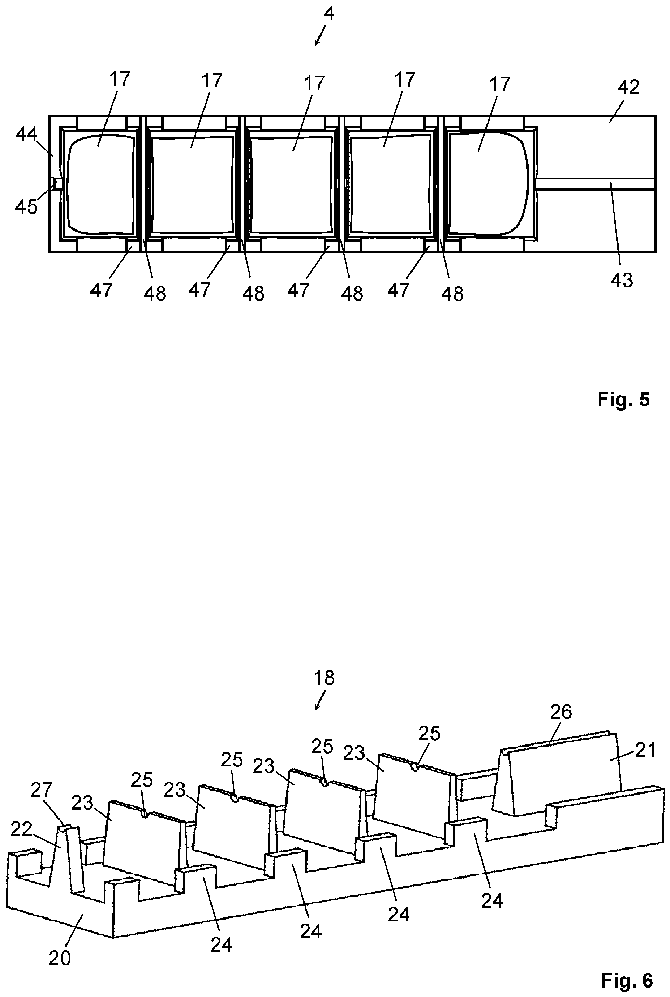

Erreichen die mit der ersten Lebensmittelkomponente 12 bestückten Magazinbasiseinheiten 4 die Zerkleinerungsstation 6, zertrennen die Trennmesser 16 die sich in den Aufnahmeräumen der Magazinbasiseinheiten 4 positionierten ersten Lebensmittelkomponente 12. Fig. 5 zeigt eine Magazinbasiseinheit 4, in deren Kammern sich zerkleinerte Lebensmittelstücke 17 aus der ersten Lebensmittelkomponente 12 befinden. Diese Darstellung entspricht also einer Situation nach der Zerkleinerungsstation 6.

Nach dem Durchlaufen der Zerkleinerungsstation 6 erreichen die mit den zerkleinerten Lebensmittelstücken 17 gefüllten Magazinbasiseinheiten 4 die Ergänzungsstation 7. Die Ergänzungsstation 7 gibt eine oder mehrere weitere Lebensmittelkomponenten in die Kammern der Magazinbasiseinheiten 4 ein. Bei diesen weiteren Lebensmittelkomponenten handelt es sich um Lebensmittelkomponenten, die bereits eine passende Größe für das Aufspießen besitzen, d.h. diese bedürfen vor dem Aufspießen keiner Zerkleinerung mehr. Beispielsweise kann es sich bei der ersten Lebensmittelkomponente 12 um ein Fleisch handeln und bei den weiteren Lebensmittelkomponenten etwa um ein Gemüse. Diese weiteren Lebensmittelkomponenten werden durch die Ergänzungsstation 7 derart in die Kammern eingelegt, dass auch diese Komponenten später durch den durch den Spießdurchgang eingetriebenen Spieß aufgespießt werden können.

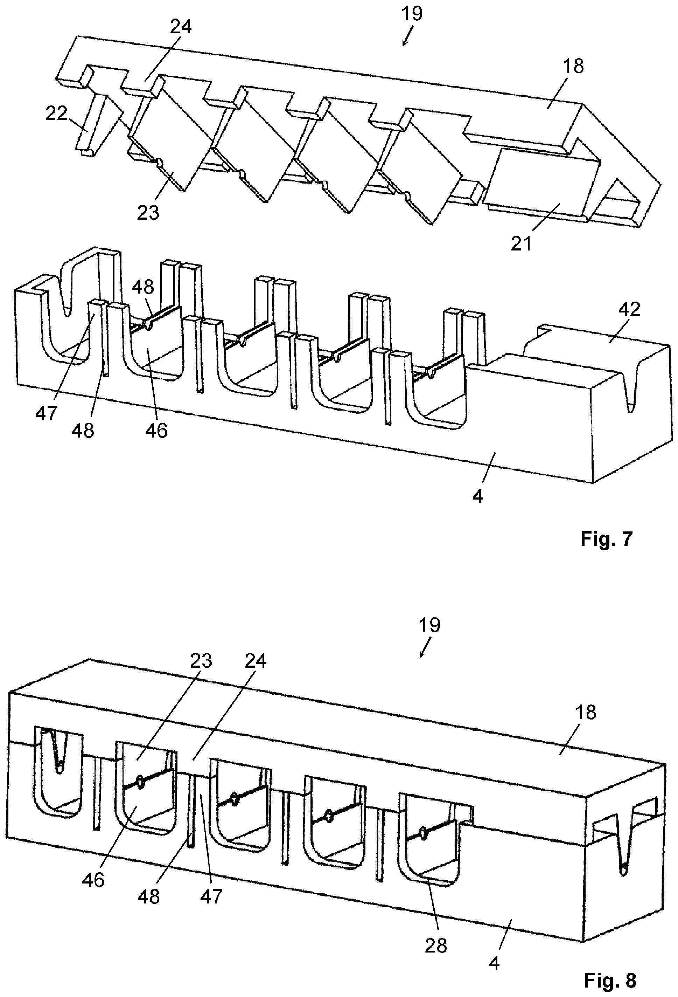

Die Verschließstation 8 verschließt die Magazinbasiseinheiten 4 beispielsweise unter Verwendung eines Roboterarms mit einem Magazindeckel 18. Der Magazindeckel 18 ist in Fig. 6 näher dargestellt. Jeweils eine Magazinbasiseinheit 4 und ein Magazindeckel 18 bilden zusammen ein Magazin 19. Fig. 7 zeigt das Magazin 19 in geöffneter Stellung. Fig. 8 zeigt das Magazin 19 in geschlossener Stellung.

Der Magazindeckel 18 weist eine längliche Deckplatte 20, einen ersten Lagervorsprung 21, einen zweiten Lagervorsprung 22, Trennwandelemente 23 und Stützauflagen 24. An den Trennwandelementen 23, dem ersten Lagervorsprung 21 und dem zweiten Lagervorsprung 22 sind jeweils Aussparungen 25, 26, 27 ausgebildet, sodass bei geschlossenem Magazin 19 der Spießdurchgang entsteht, durch den der zu bestückender Spieß das Magazin 19 von der ersten Spießauflage 43 in Richtung der zweiten Spießauflage 45 durchdringen kann.

Die Trennwandelemente 23 des Magazindeckels 18 verlaufen parallel zueinander. Die Anzahl der Trennwandelemente 23 entspricht der Anzahl der Trennwände 46 der Magazinbasiseinheit 4. Jeweils ein Trennwandelement bildet mit der zugehörigen Trennwand 46 der Magazinbasiseinheit 4 eine Wand aus, die zwei benachbarte Kammern des Magazins 19 voneinander trennen. Es verbleibt lediglich der Spießdurchgang. Auf diese Weise werden die Lebensmittelstücke 17, die sich in den einzelnen Kammern befinden, auch beim Aufspießen zuverlässig in den Kammern gehalten. Der erste Lagervorsprung 21 des Magazindeckels 18 bildet zusammen mit dem ersten Lagerblock 42 der Magazinbasiseinheit 4 einen Führungskanal für den zu bestückenden Spieß. In ähnlicher Weise bildet der zweite Lagervorsprung 22 des Magazindeckels 18 zusammen mit dem zweiten Lagerblock 44 der Magazinbasiseinheit 4 ebenfalls einen Führungskanal für den zu bestückenden Spieß. Die Stützauflagen 24 dienen zur Abstützung der Stützelemente 47 der Magazinbasiseinheit 4. Zwischen zwei benachbarten Stützelementen 47 und zwischen zwei benachbarten Stützauflagen 24 sind die Seitenwände der Magazinbasiseinheit 4 bzw. des Magazindeckels 18 derart aufgebrochen, dass Sichtfenster 28 entstehen.

Nach Durchlaufen der Verschließstation 8 befinden sich die aufzuspießenden Lebensmittelkomponenten damit innerhalb des geschlossenen Magazins 19. Anschließend transportiert die Transportvorrichtung 2 diese weiter zur Aufspießstation 9. Die Aufspießstation 9 treibt den zu bestückenden Spieß in Richtung des Spießdurchgangs durch das Magazin 19 und damit auch durch die in den Kammern des Magazins 19 positionierten Lebensmittelkomponenten, bis sämtliche Lebensmittelkomponente aufgespießt sind der ein erster Endbereich des Spießes wieder aus dem Magazin 19 austritt. Die eigentliche Herstellung des Lebensmittelspießes ist damit beendet.

Hierbei sei darauf hingewiesen, dass die zunächst als unzerkleinerte Ausgangskomponente in den Aufnahmeraum der Magazinbasiseinheit 4 eingelegte erste Lebensmittelkomponente 12 in der Zerkleinerungsstation 6 in mehrere Lebensmittelstücke zerteilt wird. Im weiteren Verlauf werden die sich weiterhin in der Magazinbasiseinheit 4 befindenden Lebensmittelstücke dann in der Aufspießstation 9 aufgespießt. D.h. die zerteilten Lebensmittelstücke werden nach dem Zerkleinern und vor dem Aufspießen nicht aus der Magazinbasiseinheit 4 entnommen, sondern verbleiben für diese Verfahrensschritte in der Magazinbasiseinheit 4. In anderen Worten erfolgt das Treiben des zu bestückenden Spießes in Richtung des Spießdurchgangs durch die Magazinbasiseinheit 4 und in die seit dem Zertrennen ununterbrochen in den Kammern positionierten Lebensmittelkomponenten. Diese Vorgehensweise erleichtert, rationalisiert und automatisiert die Herstellung der Lebensmittelspieße.

Nach dem Durchlaufen der Aufspießstation 9 transportiert die Transportvorrichtung 2 den Lebensmittelspieß weiter zur Öffnungsstation 10. Die Öffnungsstation 10 öffnet beispielsweis mit Hilfe eines Roboterarms die Magazine 19, indem der Magazindeckel 18 abgehoben wird.

Anschließend werden die geöffneten Magazinbasiseinheiten 4 durch die Transportvorrichtung 2 zur Entladestation 2 weitertransportiert. Die Entladestation 11 entnimmt beispielsweis mit Hilfe eines Roboterarms die hergestellten Lebensmittelspieße aus den Magazinbasiseinheiten 4.

Die auf diese Weise geleerten Magazinbasiseinheiten 4 können danach ggf. gereinigt werden und werden durch die endlos umlaufende Transportvorrichtung 2 wieder der Beladungsstation 5 zugeführt.

Die in Fig. 1 dargestellte Vorrichtung 1 weist die oben genannten Stationen Beladungsstation 5, Zerkleinerungsstation 6, Ergänzungsstation 7, Verschließstation 8, Aufspießstation 9, Öffnungsstation 10 und Entladestation 11 auf. Es kann bei Bedarf jedoch auf die Ergänzungsstation 7, die Verschließstation 8, die Öffnungsstation 10 und/oder die Entladestation 11 verzichtet werden. Auch ist es möglich, ein oder mehrere der Ergänzungsstation 7, Verschließstation 8, Öffnungsstation 10 und/oder Entladestation 11 als manuelle Station auszubilden.

### BEZUGSZEICHENLISTE

- 1: Vorrichtung zum Herstellen von Lebensmittelspießen
- 2: Transportvorrichtung
- 3: Förderkette/Förderband
- 4: Magazinbasiseinheit
- 5: Beladungsstation
- 6: Zerkleinerungsstation
- 7: Ergänzungsstation
- 8: Verschließstation
- 9: Aufspießstation
- 10: Öffnungsstation
- 11: Entladestation
- 12: Erste Lebensmittelkomponente
- 13: Messerwelle
- 14, 15: Auflager
- 16: Trennmesser
- 17: Lebensmittelstück
- 18: Magazindeckel
- 19: Magazin
- 20: Deckplatte
- 21: Erster Lagervorsprung
- 22: Zweiter Lagervorsprung
- 23: Trennwandelement
- 24: Stützauflage
- 25, 26, 27: Aussparung
- 28: Sichtfenster
- 41: Grundplatte
- 42: Erster Lagerblock
- 43: Erste Spießauflage
- 44: Zweiter Lagerblock
- 45: Zweite Spießauflage
- 46: Trennwand
- 47: Stützelement
- 48: Schlitz
- 49: Aussparung
- R1: Umlaufrichtung

## Patentansprüche

1. Vorrichtung (1) zum Herstellen von Lebensmittelspießen mit:
- einer endlos umlaufenden Transportvorrichtung (2) mit einer Mehrzahl von parallel zueinander und quer zur Umlaufrichtung (R1) der Transportvorrichtung (2) angeordneten Magazinbasiseinheiten (4), wobei jede der Magazinbasiseinheiten (4) aufweist:
∘ eine längliche Grundplatte (41),
∘ einen ersten Lagerblock (42), der an einem ersten längsseitigen Ende der Grundplatte (41) ausgebildet ist und eine erste Spießauflage (43) aufweist,
∘ einen zweiten Lagerblock (44), der an einem zweiten längsseitigen Ende der Grundplatte (41) ausgebildet ist und eine zweite Spießauflage (45) aufweist,
∘ Trennwände (46), die parallel zum den Lagerblöcken (42, 44) verlaufen und die Magazinbasiseinheit (4) in Kammern unterteilt, wobei die Trennwände (46) Schlitze (48) aufweisen, die in Umlaufrichtung (R1) der Transportvorrichtung (2) orientiert sind, und
∘ einen Spießdurchgang, durch den ein zu bestückender Spieß die Magazinbasiseinheit (4) von der ersten Spießauflage (43) in Richtung der zweiten Spießauflage (45) durchdringen kann; und
- einer Aufspießstation (9), welche einen zu bestückenden Spieß in Richtung des Spießdurchgangs durch die Magazinbasiseinheit (4) und die in den Kammern positionierten Lebensmittelkomponenten treibt;
**dadurch gekennzeichnet, dass** die Vorrichtung (1) ferner aufweist:
- eine Beladestation (5) zur Positionierung einer ersten Lebensmittelkomponente (12) in einem aus den Kammern der Magazinbasiseinheit (4) gebildeten Aufnahmeraum; und
- eine Zerkleinerungsstation (6), welche in Umlaufrichtung (R1) nachfolgend zur Beladestation (5) angeordnet ist, mit parallel zueinander angeordneten Trennmessern (16), welche bei umlaufenden Magazinbasiseinheiten (4) in den Schlitzen (48) laufen und die in der Beladestation (5) positionierte erste Lebensmittelkomponente (12) zertrennen; wobei die Aufspießstation (9) in Umlaufrichtung (R1) nachfolgend zur Zerkleinerungsstation (6) angeordnet ist**.**

2. Vorrichtung nach Anspruch 1 ferner aufweisend eine Verschließstation (8), welche in Umlaufrichtung (R1) zwischen der Zerkleinerungsstation (6) und der Aufspießstation (9) angeordnet ist, zum Aufbringen eines Magazindeckels (18) auf die Magazinbasiseinheit (4).

3. Vorrichtung nach Anspruch 2, wobei der Magazindeckel (18) Trennwandelemente (23) aufweist, die zusammen mit den Trennwänden (46) der Magazinbasiseinheit (4) die Kammern zur Aufnahme der Lebensmittelkomponenten sowie den Spießdurchgang bilden.

4. Vorrichtung nach einem der Ansprüche 2 oder 3, wobei an der Magazinbasiseinheit (4) Stützelemente (47) zur Abstützung des Magazindeckels (18) ausgebildet sind und wobei die Schlitze (48) auch die Stützelemente (47) durchdringen.

5. Vorrichtung nach einem der vorhergehenden Ansprüche, wobei die Trennmesser (16) als Rundmesser oder Sägeblätter ausgebildet sind.

6. Vorrichtung nach einem der vorhergehenden Ansprüche, wobei die Zerkleinerungsstation (6) Auflager (14, 15) zur Lagerung der Trennmesser (16) aufweist.

7. Vorrichtung nach einem der vorhergehenden Ansprüche ferner aufweisend eine Ergänzungsstation (7), in welcher eine oder mehrere weitere Lebensmittelkomponenten in die Kammern angeordnet werden, wobei die Ergänzungsstation (7) in Umlaufrichtung (R1) zwischen der Zerkleinerungsstation (6) und der Aufspießstation (9), bzw. bei Rückbezug auf Anspruch 2 zwischen der Zerkleinerungsstation (6) und der Verschließstation (8), angeordnet ist.

8. Vorrichtung nach einem der vorhergehenden Ansprüche ferner aufweisend eine Entladestation (11), welche in Umlaufrichtung nachfolgend zur Aufspießstation (9) angeordnet ist, zur Entnahme des hergestellten Lebensmittelspießes aus dem Magazinbasisteil (4).

9. Verfahren zum Herstellen von Lebensmittelspießen mit folgenden Verfahrensschritten:
- Positionierung einer ersten Lebensmittelkomponente (12) in einem aus Kammern einer Magazinbasiseinheit (4) gebildeten Aufnahmeraum, wobei die Magazinbasiseinheit (4) mittels einer endlos umlaufenden Transportvorrichtung (2) bewegbar ist und aufweist:
∘ eine längliche Grundplatte (41),
∘ einen ersten Lagerblock (42), der an einem ersten längsseitigen Ende der Grundplatte (41) ausgebildet ist und eine erste Spießauflage (43) aufweist,
∘ einen zweiten Lagerblock (44), der an einem zweiten längsseitigen Ende der Grundplatte (41) ausgebildet ist und eine zweite Spießauflage (45) aufweist,
∘ Trennwände (46), die parallel zum den Lagerblöcken (42, 44) verlaufen und die Magazinbasiseinheit (4) in Kammern unterteilt, wobei die Trennwände (46) Schlitze (48) aufweisen, die in Umlaufrichtung (R1) der Transportvorrichtung (2) orientiert sind, und
∘ einen Spießdurchgang, durch den ein zu bestückender Spieß die Magazinbasiseinheit (4) von der ersten Spießauflage (43) in Richtung der zweiten Spießauflage (45) durchdringen kann;
- Zertrennen der in dem Aufnahmeraum positionierten ersten Lebensmittelkomponente (12) durch parallel zueinander angeordnete Trennmesser (16), welche bei umlaufender Magazinbasiseinheit (4) in den Schlitzen (48) laufen; und
- Treiben eines zu bestückenden Spießes in Richtung des Spießdurchgangs durch die Magazinbasiseinheit (4) und die in den Kammern positionierten Lebensmittelkomponenten.

10. Verfahren nach Anspruch 9 ferner aufweisend einen Verfahrensschritt zum Aufbringen eines Magazindeckels (18) auf die Magazinbasiseinheit (4), wobei der Magazindeckel (18) Trennwandelemente (23) aufweist, die zusammen mit den Trennwänden (46) der Magazinbasiseinheit (4) die Kammern zur Aufnahme der Lebensmittelkomponenten sowie den Spießdurchgang bilden, wobei an der Magazinbasiseinheit (4) Stützelemente (47) zur Abstützung des Magazindeckels (18) ausgebildet sind und wobei die Schlitze (48) auch die Stützelemente (47) durchdringen.

11. Verfahren nach einem der Ansprüche 9 oder 10 ferner aufweisend einen Verfahrensschritt, in welchem eine oder mehrere weitere Lebensmittelkomponenten in die Kammern angeordnet werden.

12. Verfahren nach einem der Ansprüche 9 bis 11 ferner aufweisend einen Verfahrensschritt zur Entnahme des hergestellten Lebensmittelspießes aus dem Magazinbasisteil (4).

## Claims

1. Apparatus (1) which is intended for producing food skewers and has:
- an endlessly circulating transporting apparatus (2) with a plurality of magazine base units (4), which are arranged parallel to one another and transversely in relation to the circulating direction (R1) of the transporting apparatus (2), wherein each of the magazine base units (4) has:
∘ an elongate baseplate (41),
∘ a first bearing block (42), which is formed at a first longitudinal end of the baseplate (41) and has a first skewer rest (43),
∘ a second bearing block (44), which is formed at a second longitudinal end of the baseplate (41) and has a second skewer rest (45),
∘ partition walls (46), which run parallel to the bearing blocks (42, 44) and subdivide the magazine base unit (4) into chambers, wherein the partition walls (46) have slots (48) oriented in the circulating direction (R1) of the transporting apparatus (2), and
∘ a skewer passage, through which a skewer to be loaded with food can pass through the magazine base unit (4) from the first skewer rest (43) in the direction of the second skewer rest (45); and
- a skewering station (9), by means of which a skewer to be loaded with food is driven, in the direction of the skewer passage, through the magazine base unit (4) and the food components positioned in the chambers;
**characterized in that** the apparatus (1) also has:
- a loading station (5) for positioning a first food component (12) in a receiving space formed from the chambers of the magazine base unit (4); and
- a comminuting station (6), which is arranged downstream of the loading station (5), as seen in the circulating direction (R1), and has cutting blades (16), which are arranged parallel to one another and, as the magazine base units (4) circulate, run in the slots (48) and cut the first food component (12) positioned in the loading station (5); wherein
the skewering station (9) is arranged downstream of the comminuting station (6), as seen in the circulating direction (R1).

2. Apparatus according to Claim 1, also having a closing station (8), which is arranged between the comminuting station (6) and the skewering station (9), as seen in the circulating direction (R1), and is intended for applying a magazine cover (18) to the magazine base unit (4).

3. Apparatus according to Claim 2, wherein the magazine cover (18) has partition-wall elements (23) which, together with the partition walls (46) of the magazine base unit (4), form the chambers for receiving the food components and also form the skewer passage.

4. Apparatus according to either of Claims 2 and 3, wherein supporting elements (47) for supporting the magazine cover (18) are formed on the magazine base unit (4), and wherein the slots (48) also pass through the supporting elements (47).

5. Apparatus according to one of the preceding claims, wherein the cutting blades (16) are in the form of circular blades or saw blades.

6. Apparatus according to one of the preceding claims, wherein the comminuting station (6) has supports (14, 15) for bearing the cutting blades (16).

7. Apparatus according to one of the preceding claims, also having a supplementing station (7), in which one or more further food components is/are arranged in the chambers, wherein the supplementing station (7) is arranged between the comminuting station (6) and the skewering station (9), as seen in the circulating direction (R1), or, with reference back to Claim 2, is arranged between the comminuting station (6) and the closing station (8).

8. Apparatus according to one of the preceding claims, also having an unloading station (11), which is arranged downstream of the skewering station (9), as seen in the circulating direction, and by means of which the food skewer produced is removed from the magazine base part (4).

9. Method which is intended for producing food skewers and has the following method steps:
- positioning a first food component (12) in a receiving space formed from chambers of a magazine base unit (4), wherein the magazine base unit (4) can be moved by means of an endlessly circulating transporting apparatus (2) and has:
∘ an elongate baseplate (41),
∘ a first bearing block (42), which is formed at a first longitudinal end of the baseplate (41) and has a first skewer rest (43),
∘ a second bearing block (44), which is formed at a second longitudinal end of the baseplate (41) and has a second skewer rest (45),
∘ partition walls (46), which run parallel to the bearing blocks (42, 44) and subdivide the magazine base unit (4) into chambers, wherein the partition walls (46) have slots (48) oriented in the circulating direction (R1) of the transporting apparatus (2), and
∘ a skewer passage, through which a skewer to be loaded with food can pass through the magazine base unit (4) from the first skewer rest (43) in the direction of the second skewer rest (45);
- using cutting blades (16) to cut the first food component (12) positioned in the receiving space, the cutting blades being arranged parallel to one another and, as the magazine base unit (4) circulates, running in the slots (48); and
- driving a skewer to be loaded with food, in the direction of the skewer passage, through the magazine base unit (4) and the food components positioned in the chambers.

10. Method according to Claim 9, also having a method step for applying a magazine cover (18) to the magazine base unit (4), wherein the magazine cover (18) has partition-wall elements (23) which, together with the partition walls (46) of the magazine base unit (4), form the chambers for receiving the food components and also form the skewer passage, wherein supporting elements (47) for supporting the magazine cover (18) are formed on the magazine base unit (4), and wherein the slots (48) also pass through the supporting elements (47).

11. Method according to either of Claims 9 and 10, also having a method step in which one or more further food components are arranged in the chambers.

12. Method according to one of Claims 9 to 11, also having a method step in which the food skewer produced is removed from the magazine base part (4).

## Revendications

1. Dispositif (1) pour la fabrication de brochettes alimentaires, comprenant :
- un dispositif de transport (2) circulant en continu, comprenant une pluralité d'unités de base de magasin (4) disposées parallèlement les unes aux autres et transversalement à la direction de circulation (R1) du dispositif de transport (2), chaque unité de base de magasin (4) présentant :
∘ une plaque de base (41) allongée,
∘ un premier bloc de palier (42), formé à une première extrémité longitudinale de la plaque de base (41) et présentant un premier appui de brochette (43),
∘ un deuxième bloc de palier (44), formé à une deuxième extrémité longitudinale de la plaque de base (41) et présentant un deuxième appui de brochette (45),
∘ des parois de séparation (46), s'étendant parallèlement aux blocs de palier (42, 44) et divisant l'unité de base de magasin (4) en compartiments, les parois de séparation (46) présentant des fentes (48) orientées dans la direction de circulation (R1) du dispositif de transport (2), et
∘ un passage de brochette, à travers lequel une brochette à garnir peut traverser l'unité de base de magasin (4) depuis le premier appui de brochette (43) en direction du deuxième appui de brochette (45) ; et
- une station d'enbrochage (9), qui entraîne une brochette à garnir en direction du passage de brochette à travers l'unité de base de magasin (4) et les composants alimentaires positionnés dans les compartiments ;
**caractérisé en ce que** le dispositif (1) présente en outre :
- une station de chargement (5) destinée à positionner un premier composant alimentaire (12) dans un espace de réception formé par les compartiments de l'unité de base de magasin (4) ; et
- une station de découpe (6), disposée en aval de la station de chargement (5) dans la direction de circulation (R1), comprenant des lames de séparation (16) disposées parallèlement les unes aux autres, lesquelles, lorsque les unités de base de magasin (4) sont en circulation, se déplacent dans les fentes (48) et sectionnent le premier composant alimentaire (12) positionné dans la station de chargement (5) ; où
la station d'enbrochage (9) est disposée en aval de la station de découpe (6) dans la direction de circulation (R1).

2. Dispositif selon la revendication 1, comprenant en outre une station de fermeture (8), disposée dans la direction de circulation (R1) entre la station de découpe (6) et la station d'enbrochage (9), pour appliquer un couvercle de magasin (18) sur l'unité de base de magasin (4).

3. Dispositif selon la revendication 2, dans lequel le couvercle de magasin (18) présente des éléments de paroi de séparation (23) qui, conjointement avec les parois de séparation (46) de l'unité de base de magasin (4), forment les compartiments destinés à recevoir les composants alimentaires ainsi que le passage de brochette.

4. Dispositif selon l'une quelconque des revendications 2 ou 3, où des éléments de support (47) destinés à soutenir le couvercle de magasin (18) sont formés sur l'unité de base de magasin (4), et où les fentes (48) traversent également les éléments de support (47).

5. Dispositif selon l'une quelconque des revendications précédentes, où les lames de séparation (16) sont réalisées sous forme de couteaux circulaires ou de lames de scie.

6. Dispositif selon l'une quelconque des revendications précédentes, où la station de découpe (6) présente des paliers (14, 15) pour le montage des lames de séparation (16).

7. Dispositif selon l'une quelconque des revendications précédentes, comprenant en outre une station d'ajout (7), dans laquelle un ou plusieurs autres composants alimentaires sont disposés dans les compartiments, où la station d'ajout (7) est disposée dans la direction de circulation (R1) entre la station de découpe (6) et la station d'enbrochage (9) ou, en cas de dépendance à la revendication 2, entre la station de découpe (6) et la station de fermeture (8).

8. Dispositif selon l'une quelconque des revendications précédentes, comprenant en outre une station de déchargement (11), disposée en aval de la station d'enbrochage (9) dans la direction de circulation, pour le retrait de la brochette alimentaire fabriquée hors de la partie de base de magasin (4).

9. Procédé de fabrication de brochettes alimentaires comprenant les étapes suivantes :
- le positionnement d'un premier composant alimentaire (12) dans un espace de réception formé par des compartiments d'une unité de base de magasin (4), l'unité de base de magasin (4) étant déplaçable au moyen d'un dispositif de transport (2) circulant en continu et comprenant :
∘ une plaque de base (41) allongée,
∘ un premier bloc de palier (42), formé à une première extrémité longitudinale de la plaque de base (41) et présentant un premier appui de brochette (43),
∘ un deuxième bloc de palier (44), formé à une deuxième extrémité longitudinale de la plaque de base (41) et présentant un deuxième appui de brochette (45),
∘ des parois de séparation (46), s'étendant parallèlement aux blocs de palier (42, 44) et divisant l'unité de base de magasin (4) en compartiments, les parois de séparation (46) présentant des fentes (48) orientées dans la direction de circulation (R1) du dispositif de transport (2), et
- un passage de brochette, à travers lequel une brochette à garnir peut traverser l'unité de base de magasin (4) depuis le premier appui de brochette (43) en direction du deuxième appui de brochette (45) ;
- le sectionnement du premier composant alimentaire (12) positionné dans l'espace de réception au moyen de lames de séparation (16) disposées parallèlement les unes aux autres, lesquelles, lorsque l'unité de base de magasin (4) est en circulation, se déplacent dans les fentes (48) ; et
- l'entraînement d'une brochette à garnir en direction du passage de brochette à travers l'unité de base de magasin (4) et les composants alimentaires positionnés dans les compartiments.

10. Procédé selon la revendication 9, comprenant en outre une étape consistant à appliquer un couvercle de magasin (18) sur l'unité de base de magasin (4), le couvercle de magasin (18) présentant des éléments de paroi de séparation (23) qui, conjointement avec les parois de séparation (46) de l'unité de base de magasin (4), forment les compartiments destinés à recevoir les composants alimentaires ainsi que le passage de brochette, des éléments de support (47) destinés à soutenir le couvercle de magasin (18) étant formés sur l'unité de base de magasin (4), et les fentes (48) traversant également les éléments de support (47).

11. Procédé selon l'une quelconque des revendications 9 ou 10, comprenant en outre une étape dans laquelle un ou plusieurs autres composants alimentaires sont disposés dans les compartiments.

12. Procédé selon l'une quelconque des revendications 9 à 11, comprenant en outre une étape de retrait de la brochette alimentaire fabriquée hors de la partie de base de magasin (4).
